# EUROPÄISCHE PATENTSCHRIFT

(11) **EP 4 364 925 B1**
(45) Veröffentlichungstag und Bekanntmachung des Hinweises auf die Patenterteilung: **25.06.2025**
(21) Anmeldenummer: 23199321.3
(22) Anmeldetag: 25.09.2023
(51) Int. Cl.: B29C 49/48, B29C 49/06

(54) **HALTERUNG ZUR LAGERUNG VON FORMTEILEN EINER MEHRTEILIGEN BLASFORM, BLASFORMMAGAZIN MIT EINER HALTERUNG, VERFAHREN ZUM LAGERN UND/ODER BEREITSTELLEN VON FORMTEILEN EINER MEHRTEILIGEN BLASFORM**
HOLDER FOR STORING MOLD PARTS OF A MULTI-PART BLOW MOLD, BLOW MOLD MAGAZINE WITH A HOLDER, METHOD FOR STORING AND/OR PROVIDING MOLD PARTS OF A MULTI-PART BLOW MOLD
SUPPORT POUR LE STOCKAGE DE PIÈCES MOULÉES D'UN MOULE DE SOUFFLAGE EN PLUSIEURS PARTIES, MAGASIN DE MOULES DE SOUFFLAGE AVEC UN SUPPORT, PROCÉDÉ DE STOCKAGE ET/OU DE MISE À DISPOSITION DE PIÈCES MOULÉES D'UN MOULE DE SOUFFLAGE EN PLUSIEURS PARTIES

(30) Priorität: 03.11.2022 DE 102022129056
(43) Veröffentlichungstag der Anmeldung: 08.05.2024
(73) Patentinhaber: KHS GmbH, 44143 Dortmund (DE)
(72) Erfinder: Polzin, Christian, 23843 Bad Oldesloe (DE); Lewin, Frank, 22889 Tangstedt (DE); Godau, Günther, 22145 Hamburg (DE); Schumacher, Dirk, 22767 Hamburg (DE)
(74) Vertreter: Eisenführ Speiser

(56) Entgegenhaltungen:
- EP-A2- 2 418 069
- EP-B1- 2 292 402
- EP-B1- 2 878 423
- DE-U1- 202012 013 536

## Beschreibung

Die vorliegende Erfindung betrifft eine Halterung zur Lagerung von Formteilen einer mehrteiligen Blasform. Zudem betrifft die vorliegende Erfindung ein Blasformmagazin mit wenigstens einer Halterung zur Lagerung von Formteilen einer mehrteiligen Blasform. Weiter betrifft die vorliegende Erfindung ein Verfahren zum Lagern von Formteilen einer mehrteiligen Blasform. Schließlich betrifft die vorliegende Erfindung ein Verfahren zum Bereitstellen von Formteilen einer mehrteiligen Blasform für einen Umrüstvorgang einer Umformmaschine.

Eine Blasform, die auch als Formwerkzeug bekannt ist, wird in Streckblasverfahren oder Extrusionsblasverfahren zur Umformung von Vorformlingen zu Behältern eingesetzt. Die Blasform ist Teil einer Umformmaschine zur Herstellung von Behältern aus Vorformlingen und die Blasform wird in einer Umformstation eingesetzt. Das Funktionsprinzip einer Blasform ist dabei, dass ein Vorformling innerhalb der Blasform angeordnet und dieser unter Druck gegen die Blasform expandiert wird. Der expandierte Vorformling nimmt so die Innenkontur der Blasform an. Ein ausgeformter Behälter entsteht.

Blasformen sind in der Regel mehrteilig ausgebildet, das heißt, sie bestehen aus mehreren Formteilen, die zusammengesetzt die Blasform ausbilden. Beispielsweise sind dreiteilige Blasformen bekannt, die aus zwei Seitenteilen und einem Bodenteil ausgebildet sind. Es sind aber auch zweiteilige Blasformen bekannt, die nur zwei Formhälften aufweisen. Die Formteile der Blasform sind zumeist aus Aluminium ausgebildet.

Bei der Herstellung von Behältern aus Vorformlingen kommt es regelmäßig vor, dass die Formteile der Blasform ausgewechselt bzw. getauscht werden, wenn zum Beispiel mit der Umformmaschine andere Behälter mit einer anderen Behälterkontur oder -größe produziert werden sollen. Die Umformmaschine wird also für ein neues Produkt umgerüstet, das heißt, es werden Teile der Umformmaschine gewechselt, wie zum Beispiel die Blasformen. Dieser Vorgang wird auch als Umrüsten bezeichnet. Das Umrüsten der Blasform der Umformmaschine erfolgt in der Praxis händisch. Bekannt ist auch ein automatisiertes Umrüsten mit Industrierobotern.

Zum Lagern alter Formteile und/oder zum Bereitstellen neuer Formteile für den Umrüstvorgang sind Vorrichtungen zur Aufbewahrung der Formteile der Blasform bekannt. Beispielsweise ist aus der EP 2 878 423 B1 eine Magazineinrichtung bekannt, auf der mehrere geschlossene und zusammengefügte Blasformen abgestellt werden. Auch aus der DE 20 2012 013 536 U1 ist eine Lagereinrichtung zur Lagerung von mehreren Blasformen bekannt, die ebenfalls im geschlossenen bzw. zusammengefügten Zustand aufbewahrt werden. Daneben ist aus der EP 2 292 402 B1 eine Magazinvorrichtung zur Aufbewahrung einer Vielzahl von Blasformen bekannt.

Zudem ist aus der DE 10 2022 113 466 ein mobiles Blasformmagazin bekannt. Das mobile Blasformmagazin weist starre und unbewegliche Halteelemente für Seitenteile und Bodenteile von Blasformen auf. Weitere verwandte Vorrichtungen und Verfahren sind in den Patentschriften EP2418069A2, DE102011053577A1, DE3838984A1 und WO2012/120031A1 beschrieben.

Für jede mehrteilige Blasform ist eine Halterung zum sicheren Lagern bzw. Aufbewahren der Formteile der mehrteiligen Blasform vorgesehen und auf eine solche Halterung bezieht sich die vorgeschlagene Lösung.

Beim Lagern der Formteile einer Blasform ist es wünschenswert, dass die Formteile sicher gelagert sind, das heißt, dass die Formteile sich nicht unkontrolliert bewegen oder sogar herabfallen. Daneben ist es beim Lagern der Formteile auch wünschenswert, dass die Formteile und insbesondere deren Innenkonturen, gegen die Vorformlinge expandiert werden, vor Verunreinigung oder Beschädigung geschützt sind. Ein dritter wünschenswerter Aspekt ist, dass die Formteile auch gut handhabbar sind, das heißt, dass diese leicht aus der Halterung entnehmbar sind oder leicht darin platziert werden können.

Aufgabe der vorliegenden Erfindung ist es deshalb, eines der oben genannten Probleme zu adressieren, den allgemeinen Stand der Technik zu verbessern oder eine Alternative zu bisher Bekanntem bereitzustellen. Insbesondere soll eine Lösung bereitgestellt werden, mit der die Formteile einer Blasform sicher gehalten werden, mit der eine Verunreinigung oder Beschädigung der Formteile reduziert wird und mit der (gleichzeitig) eine leichte Handhabung der Formteile gewährleistet wird.

Zur Lösung der Aufgabe(n) wird eine Halterung zur Lagerung von Formteilen einer mehrteiligen Blasform gemäß Anspruch 1 vorgeschlagen.

Es wird also eine Halterung zur Lagerung von Formteilen einer mehrteiligen Blasform vorgeschlagen. Die Halterung kann auch als Ablageplatz, Haltemittel oder Blasformaufnahme verstanden werden. Die Halterung ist dazu eingerichtet, Formteile einer Blasform zu lagern oder zu halten. Die Formteile der mehrteiligen Blasform sind zum Beispiel zwei Seitenteile und ein Bodenteil, wie vorstehend zum Stand der Technik beschrieben. Die Blasform ist mehrteilig ausgebildet, das heißt, sie ist wenigstens aus zwei Formteilen ausgebildet. Das Funktionsprinzip der Blasform wurde vorstehend zum Stand der Technik beschrieben.

Die vorgeschlagene Halterung umfasst ein erstes Haltelement zum Halten eines ersten Seitenteils der Blasform. Die Halterung umfasst also ein erstes Element, das dazu eingerichtet und vorgesehen ist, ein erstes Seitenteil der Blasform zu halten. Das erste Halteelement ist eine technische Einrichtung, die ein erstes Seitenteil hält und auch als Haltemittel verstanden werden kann. Das erste Halteelement ist also eine Aufnahme für ein erstes Seitenteil der mehrteiligen Blasform und das erste Seitenteil kann darin platziert werden. Das erste Halteelement ist bevorzugt formschlüssig an Bereiche des ersten Seitenteils angepasst.

Die vorgeschlagene Halterung umfasst zudem ein zweites Halteelement zum Halten eines zweiten Seitenteils der Blasform. Analog zum ersten Halteelement umfasst die Halterung demnach ein zweites Element, das dazu eingerichtet und vorgesehen ist, ein zweites Seitenteil der Blasform zu halten. Das zweite Halteelement ist eine technische Einrichtung, die ein zweites Seitenteil hält und auch als Haltemittel verstanden werden kann. Das zweite Halteelement ist also eine Aufnahme für ein zweites Seitenteil der mehrteiligen Blasform und das zweite Seitenteil kann darin platziert werden. Das zweite Halteelement ist bevorzugt formschlüssig an Bereiche des zweiten Seitenteils angepasst.

Die vorgeschlagene Halterung umfasst optional ein drittes Halteelement zum Halten eines Bodenteils der Blasform. Analog zum ersten und zweiten Halteelement umfasst die Halterung demnach ein drittes Element, das dazu eingerichtet und vorgesehen ist, ein Bodenteil der Blasform zu halten. Das dritte Halteelement ist eine technische Einrichtung, die ein Bodenteil der Blasform hält und ebenfalls als Haltemittel verstanden werden kann. Das dritte Halteelement ist also eine Aufnahme für ein Bodenteil der mehrteiligen Blasform und das Bodenteil kann darin platziert werden. Das Bodenteil kann beispielsweise Durchtrittsöffnungen aufweisen, durch die abstehende Teile der Bodenform eingesteckt werden können. Solche abstehenden Teile können z.B. Anschlüsse oder Verbindungsleitungen an elektrische oder fluidische Versorgungsleitungen sein. Auch die vorstehend beschriebenen ersten und zweiten Halteelemente können aus den gleichen Gründen solche Durchtrittsöffnungen aufweisen.

Wesentlich ist, dass die Halterung eine betätigbare Verstellmechanik mit einer Betätigungseinrichtung aufweist, wobei die Verstellmechanik dazu eingerichtet ist, wenigstens eines der Halteelemente relativ zu einem der anderen Halteelemente zu bewegen, um die gehaltenen Formteile von einem geöffneten Zustand in einen geschlossenen Zustand zu bewegen oder umgekehrt von dem geschlossenen Zustand in den geöffneten Zustand.

Die Verstellmechanik ist also eine Mechanik, die dazu eingerichtet und vorgesehen ist, wenigstens eines der beschriebenen Halteelemente relativ zu einem der anderen Halteelemente zu bewegen. Die Verstellmechanik kann also auch als eine Bewegungsmechanik verstanden werden, die eines der Halteelemente relativ zu einem der anderen Halteelemente bewegt. Die Verstellmechanik ist mittels einer Betätigungseinrichtung betätigbar. Die Betätigungseinrichtung ist dazu beispielsweise mit einem Hebelmittel ausgebildet. Wird beispielsweise das Hebelmittel betätigt, bewegt sich eines der Halteelemente relativ zu einem der anderen Halteelemente. Die Betätigungseinrichtung kann z.B. mechanisch, elektrisch, pneumatisch oder hydraulisch angetrieben ausgebildet sein. Es ist bevorzugt vorgesehen, dass die Verstellmechanik z.B. manuell betätigbar ist, zum Beispiel mit einem dafür vorgesehenen Hebelmittel. Die Verstellmechanik kann aber auch pneumatisch oder elektrisch betätigbar ausgebildet sein, zum Beispiel mit einem Verstellmotor oder mit einer Hydraulik oder dergleichen. Wird die Betätigungseinrichtung betätigt, bewegt sich wenigstens eines der vorstehend beschriebenen Halteelemente relativ zu einem der anderen Halteelemente. In einem konkreten Beispiel bewegt sich beispielsweise das erste Halteelement relativ zu dem zweiten Halteelement. Es kann aber auch vorgesehen sein, dass sich das erste und zweite Halteelement gleichzeitig relativ zueinander bewegen, z.B. aufeinander zu oder voneinander weg, wenn die Verstellmechanik mit der Betätigungseinrichtung betätigt wird. Daneben kann es beispielsweise auch vorgesehen sein, dass sich das erste Halteelement und das zweite Halteelement relativ zum dritten Halteelement bewegen. Relativ bewegen bedeutet also, dass sich zumindest Teile der Halteelemente aufeinander zu- oder voneinander wegbewegen. Durch den Wortlaut "wenigstens eines der Halteelemente" wird dabei ausgedrückt, dass wenigstens eines der Halteelemente beweglich ausgebildet ist und mittels der Verstellmechanik und der Betätigungseinrichtung bewegbar ist. Es können aber auch, wie zuvor beschrieben, gleichzeitig mehrere der Halteelemente Bewegungen ausführen.

Durch die Relativbewegung eines oder mehrerer der Halteelemente wird erreicht, dass sich die mit den Haltelementen gehaltenen Formteile ebenfalls relativ zueinander bewegen. Die Relativbewegung eines der Halteelemente relativ zu einem der anderen Halteelemente wird dabei ausgeführt, um die Formteile von einem geöffneten Zustand in einen geschlossenen Zustand zu bewegen bzw. zu überführen. Es ist aber auch umgekehrt möglich und vorgesehen, dass die Formteile von dem geschlossenen Zustand in den geöffneten Zustand mittels der Verstellmechanik und der Betätigungseinrichtung bewegbar sind. Die Formteile können auch als Blasformteile verstanden werden.

Der geöffnete Zustand kann synonym als ungefügter Zustand oder nicht zusammengesetzter Zustand aufgefasst werden. In dem geöffneten Zustand bilden die Formteile der Blasform keine geschlossene Form aus, es besteht noch Zugang zu deren Innenkonturen.

Der geschlossene Zustand kann synonym als gefügter Zustand oder zusammengesetzter Zustand aufgefasst werden. In dem geschlossenen odergefügten Zustand bilden die Formteile zusammen eine innere Kavität und eine Gesamtinnenkontur aus, gegen die der Vorformling expandiert werden könnte.

Erfindungsgemäß wurde erkannt, dass der geschlossene Zustand und der geöffnete Zustand unterschiedliche positive Eigenschaften aufweisen. In dem geschlossenen Zustand der Formteile sind die Formteile beispielsweise besser gegen mögliche Verunreinigung und Beschädigung ihrer Innenkonturen geschützt als im geöffneten Zustand. Für ein Umrüsten der Formteile ist hingegen eine einfache Handhabung vorteilhaft. Eine einfache Handhabung der Formteile ist im geöffneten Zustand möglich, insbesondere vereinzelt.

Mit der vorgeschlagenen Halterung wird also eine Lösung bereitgestellt, mit der die Formteile in den geschlossenen Zustand überführbar sind, in welchem die Formteile besser gegen Verunreinigung oder Beschädigung der Innenkonturen geschützt sind und in dem die Formteile sicher gehalten werden können. Der geschlossene Zustand ist zum Beispiel für die Lagerung und den Transport der Formteile vorteilhaft. Gleichzeitig können die Formteile aber auch bei Bedarf in den geöffneten Zustand überführt werden, in welchem die Formteile leicht und vereinzelt handzuhaben sind, also zum Beispiel leichter aus der Halterung entnommen werden können. Der geöffnete Zustand ist zum Beispiel beim Umrüsten der Formteile vorteilhaft, wenn zum Beispiel nur die Seitenteile getrennt von dem Bodenteil ausgewechselt werden sollen oder ein manueller Wechsel der Formteile erfolgt, bei dem alle Formteile einzeln in der Umformstation gewechselt werden. Zudem sinkt die Klemmgefahr bei einem manuellen Wechsel der Formteile, denn der geschlossene Zustand oder der geöffnete Zustand kann über die betätigbare Verstellmechanik eingestellt werden. Ermöglicht wird diese Variabilität und Flexibilität dadurch, dass die Halterung beide Zustände einnehmen und über eine Verstellmechanik zwischen diesen beiden Zuständen gewechselt werden kann.

Die Halterung ist bevorzugt Teil eines Blasformmagazins, wie zum Beispiel in der DE 10 2022 113 466 gezeigt. Ein Blasformmagazin ist ein Magazin oder eine Ablageeinrichtung, auf dem bzw. auf der Blasformen bereitgestellt oder abgelegt werden, die in die Umformmaschine neu eingefügt werden sollen oder aus der Umformmaschine herausgenommen werden. Das Blasformmagazin ist also ein Magazin oder eine Ablageeinrichtung für mehrteiligen Blasformen.

Vorzugsweise weist die Verstellmechanik ein erstes Verstellmittel zum Bewegen des ersten Halteelementes relativ zum zweiten Haltelement auf. Es wird also vorgeschlagen, dass die Verstellmechanik ein Mittel aufweist, um das erste Halteelement relativ zum zweiten Halteelement zu bewegen. Das zweite Halteelement kann ebenfalls beweglich ausgebildet sein oder auch unbeweglich ausgebildet sein. Als erstes Verstellmittel kann beispielsweise ein mechanisch, elektrisch, pneumatisch oder hydraulisch angetriebenes Verstellmittel vorgesehen sein oder dergleichen.

Vorzugsweise ist das erste Verstellmittel als Kurvengetriebe ausgebildet mit einer ersten Führungsrolle und einer ersten Führungsfläche. Die erste Führungsrolle ist dabei so ausgebildet, dass diese sich entlang der ersten Führungsfläche bewegen kann. Die Führungsrolle kann auch als Rollelement oder Abtaster verstanden werden. Die Führungsrolle kann auch als Gleitelement ausgebildet sein. Es muss also keine drehbare Rolle vorgesehen sein. Die Führungsfläche kann auch als Kurvenkörper mit einer Kurve verstanden und bezeichnet werden. Die erste Führungsrolle und die erste Führungsfläche werden dazu eingesetzt, um eine relative Bewegung des ersten Halteelementes zum zweiten Halteelementes zu bewirken. Das Funktionsprinzip von Kurvengetrieben ist grundsätzlich bekannt. Es wird dabei entweder die Kurve der Kurvenfläche durch Bewegung der Kurvenfläche, zum Beispiel Rotation oder Längsverschiebung, auf die Kurvenrolle übertragen (feste Kurvenrolle und bewegliche Kurvenfläche) oder es wird die Kurve der Kurvenfläche durch Bewegung der Kurvenrolle auf die Kurvenrolle übertragen (bewegliche Kurvenrolle und feste Kurvenfläche).

In einer besonders bevorzugten Ausführungsform ist die erste Führungsrolle an dem ersten Halteelement befestigt und die erste Führungsrolle entlang der ersten Führungsfläche durch Betätigung der Betätigungseinrichtung der Verstellmechanik bewegbar, um das erste Halteelement relativ zum zweiten Haltelement zu bewegen. Es wird also vorgeschlagen, dass die erste Führungsrolle mechanisch an dem ersten Halteelement befestigt ist und durch eine Betätigung der Betätigungseinrichtung die erste Führungsrolle auf der Führungsfläche entlang bewegt wird bzw. bewegbar ist.

Vorzugsweise weist die Verstellmechanik ein zweites Verstellmittel zum Bewegen des zweiten Halteelementes relativ zum ersten Haltelement auf. Es wird also vorgeschlagen, dass die Verstellmechanik ein Mittel aufweist, um das zweite Halteelement relativ zum ersten Halteelement zu bewegen. Ist das erste Halteelement ebenfalls beweglich ausgebildet bewegen sich das erste Halteelement und das zweite Halteelement relativ aufeinander zu. Als zweites Verstellmittel kann beispielsweise ein mechanisch, elektrisch, pneumatisch oder hydraulisch angetriebenes Verstellmittel vorgesehen sein oder dergleichen.

Vorzugsweise ist das zweite Verstellmittel als Kurvengetriebe ausgebildet mit einer zweiten Führungsrolle und einer zweiten Führungsfläche. Die zweite Führungsrolle ist dabei so ausgebildet, dass diese sich entlang der zweiten Führungsfläche bewegen kann. Die Führungsrolle kann auch als Rollelement oder Abtaster verstanden werden. Die Führungsrolle kann auch als Gleitelement ausgebildet sein. Die Führungsfläche kann auch als Kurvenkörper mit einer Kurve verstanden und bezeichnet werden. Die zweite Führungsrolle und die zweite Führungsfläche werden dazu eingesetzt, um eine relative Bewegung des zweiten Halteelementes zum ersten Halteelement zu bewirken. Das Funktionsprinzip von Kurvengetrieben ist grundsätzlich bekannt, wie vorstehend beschrieben.

In einer besonders bevorzugten Ausführungsform ist die zweite Führungsrolle an dem zweiten Halteelement befestigt und die zweite Führungsrolle entlang der zweiten Führungsfläche durch Betätigung der Betätigungseinrichtung der Verstellmechanik bewegbar, um das zweite Halteelement relativ zum ersten Haltelement zu bewegen. Es wird also vorgeschlagen, dass die zweite Führungsrolle mechanisch an dem zweiten Halteelement befestigt ist und durch eine Betätigung der Betätigungseinrichtung die zweite Führungsrolle auf der Führungsfläche entlang bewegt wird bzw. bewegbar ist. Dieses System ist sehr robust und langlebig.

Vorzugsweise weist die Verstellmechanik ein drittes Verstellmittel zum Bewegen des ersten Halteelementes und/oder zweiten Halteelementes relativ zum dritten Haltelement auf. Es wird also vorgeschlagen, dass die Verstellmechanik ein Mittel aufweist, um das erste und/oder zweite Halteelement relativ zum dritten Halteelement zu bewegen oder um das dritte Halteelement relativ zum ersten und/oder zweiten Halteelement zu bewegen. Dazu können beispielsweise das erste und/oder das zweiter Halteelement beweglich ausgebildet sein, um die beiden Halteelemente relativ zum dritten Halteelement zu bewegen. Zusätzlich oder alternativ kann aber auch das dritte Halteelement beweglich ausgebildet sein, um das dritte Halteelement relativ zum ersten und/oder zweiten Halteelement zu bewegen. Als drittes Verstellmittel kann beispielsweise ein mechanisch, elektrisch, pneumatisch oder hydraulisch angetriebenes Verstellmittel vorgesehen sein oder dergleichen.

Vorzugsweise umfasst das dritte Verstellmittel eine Linearführung, z.B. eine Schiene, z.B. eine Gleitschiene, mit einem darauf beweglich angeordneten Schlitten, z.B. einem Gleitschlitten, wobei das erste Halteelement und/oder das zweite Halteelement an dem beweglichen Schlitten befestigt sind, um das erste Halteelement und/oder zweite Halteelement relativ zum dritten Haltelement bewegbar auszubilden. Es wird also vorgeschlagen, dass das erste und/oder zweite Halteelement beweglich auf einem Schlitten gelagert sind und der Schlitten auf der Linearführung, z.B. einer Schiene, geführt ist. Es wird also vorgeschlagen, dass wenigstens das erste und/oder zweite Halteelement beweglich ausgebildet sind, um diese beiden Halteelemente relativ zum dritten Halteelement zu bewegen. Der Schlitten kann also per Hand bewegt werden oder z.B. automatisiert mit einem Industrieroboter.

In einer besonders bevorzugten Ausführungsform ist der Schlitten durch Betätigung der Betätigungseinrichtung der Verstellmechanik bewegbar, um das erste Halteelement und/oder zweite Halteelement relativ zum dritten Haltelement zu bewegen. Es wird also vorgeschlagen, dass der Schlitten, an welchem das erste und/oder zweite Halteelement mechanisch befestigt sind, über die Verstellmechanik und dessen Betätigung belegbar ist. Wird also die Verstellmechanik betätigt, verschiebt sich der Schlitten und damit auch die an dem Schlitten befestigten Halteelemente. Hierzu kann beispielsweise ein Koppelgetriebe vorgesehen sein. In dieser Ausführungsform erfolgt das Bewegen des Schlittens also nicht händisch oder mit einem Industrieroboter, sondern, indem die Betätigungseinrichtung der Verstellmechanik betätigt wird. Das Betätigen der Betätigungseinrichtung der Verstellmechanik kann je nach Ausführung der Betätigungseinrichtung manuell durch Umlegen eines Hebels oder dergleichen erfolgen oder durch Betätigen eines Schalters erfolgen.

Vorzugsweise ist die Betätigungseinrichtung der Verstellmechanik als ein Hebelmittel ausgebildet, und durch ein Betätigen des Hebelmittels ist das erste Halteelement relativ zum zweiten Halteelement bewegbar und/oder durch Betätigen des Hebelmittels ist das zweite Halteelement relativ zum ersten Halteelement bewegbar und/oder durch Betätigen des Hebelmittels ist das erste Halteelement und das zweite Halteelement relativ zum dritten Halteelement bewegbar. Es wird also ein Hebelmechanismus vorgeschlagen, der manuell betätigbar ist. Wird der Hebel umgelegt, erfolgt eine relative Bewegung der vorstehend beschriebenen Halteelemente zueinander.

Gemäß einem weiteren Aspekt Erfindung wird ein Blasformmagazin mit wenigstens einer Halterung zur Lagerung von Formteilen einer mehrteiligen Blasform vorgeschlagen, wobei die Halterung ausgebildet ist nach einer der vorstehend beschriebenen Ausführungsformen. Es wird auf die vorstehend beschriebenen Definitionen, Erläuterungen und Vorteile zu der Halterung verwiesen. Das Blasformmagazin ist beispielsweise ein mobiles Blasformmagazin, wie in der DE 10 2022 113 466 beschrieben, dessen Inhalt vollständig durch Referenz hierin miteinbezogen wird. Ein Blasformmagazin ist ein Magazin oder eine Ablageeinrichtung, auf dem bzw. auf der Blasformen bereitgestellt oder abgelegt werden, die in die Umformmaschine neu eingefügt werden sollen oder aus der Umformmaschine herausgenommen werden sollen.

Gemäß einem weiteren Aspekt der Erfindung wird ein Verfahren zur Lagerung von Formteilen einer mehrteiligen Blasform vorgeschlagen. Das Verfahren umfasst dabei den Schritt Positionieren der Formteile in einer Halterung zur Lagerung von Formteilen einer mehrteiligen Blasform. Bevorzugt ist die Halterung eine wie vorstehend oder nachstehend beschriebene Halterung. Die Halterung ist also vorzugsweise ausgebildet nach einer der vorstehenden oder nachstehenden Ausführungsformen. Es wird auf die vorstehend beschriebenen Definitionen, Erläuterungen und Vorteile zu der Halterung verwiesen.

Das Verfahren umfasst den zusätzlichen Schritt Betätigen einer betätigbaren Verstellmechanik der Halterung mit einer Betätigungseinrichtung und relatives Bewegen wenigstens eines Halteelementes der Halterung relativ zu einem anderen Halteelement der Halterung, um die in der Halterung positionierten Formteile von einem geöffneten Zustand in einen geschlossenen Zustand zu bewegen, oder umgekehrt, um die in der Halterung positionierten Formteile von einem geschlossenen Zustand in einen geöffneten Zustand zu bewegen.

Es wird also in anderen Worten vorgeschlagen, dass die Formteile einer Blasform aus einer Umformstation entnommen werden und in einem ersten Schritt in einer Halterung zur Lagerung der Formteile platziert werden. In einem zweiten Schritt erfolgt dann das Betätigen einer Verstellmechanik, um Halteelemente der Halterung relativ zueinander zu bewegen, damit die in der Halterung platzierten Formteile von dem geöffneten Zustand in den geschlossenen Zustand überführt werden. Die Formteile werden also in den geschlossenen Zustand zur Lagerung der Formteile überführt. Wie oben beschrieben, sind die Formteile in dem geschlossenen Zustand besser gegen Verunreinigung oder Beschädigung geschützt.

Gemäß einem weiteren Aspekt Erfindung wird ein Verfahren zum Bereitstellen von Formteilen einer mehrteiligen Blasform für einen Umrüstvorgang einer Umformmaschine vorgeschlagen. Das Verfahren umfasst dabei den Schritt Betätigen einer betätigbaren Verstellmechanik der Halterung mit einer Betätigungseinrichtung und relatives Bewegen wenigstens eines Halteelementes der Halterung relativ zu einem anderen Halteelement der Halterung, um in der Halterung positionierte Formteile von einem geschlossenen Zustand in einen geöffneten Zustand zu bewegen. Die Halterung ist vorzugsweise ausgebildet nach einer der vorstehenden oder nachstehenden Ausführungsformen. Es wird auf die vorstehend beschriebenen Definitionen, Erläuterungen und Vorteile zu der Halterung verwiesen.

Es wird also in anderen Worten vorgeschlagen, dass die Formteile der Blasform in einer Halterung platziert sind, mit der es möglich ist, platzierte oder abgelegte Formteile einer mehrteiligen Blasform von dem geschlossenen Zustand in den geöffneten Zustand zu überführen. Das Einstellen des geöffneten Zustandes erfolgt durch Betätigen der Betätigungseinrichtung der betätigbaren Verstellmechanik. Wie oben beschrieben, sind die Formteile in dem geöffneten Zustand einfach und vereinzelt zu entnehmen und sie sind damit leichter handhabbar. Das Umrüsten der Umformmaschine bzw. der Umrüstvorgang der Umformmaschine, der vorstehend zum Stand der Technik beschrieben wurde, wird damit vereinfacht.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden:
- Fig. 1: zeigt in einer ersten perspektivischen Ansicht eine Halterung zur Lagerung von Formteilen einer mehrteiligen Blasform in einer ersten Ausführungsform;
- Fig. 2: zeigt die Halterung aus der Figur 1 in einer zweiten perspektivischen Ansicht;
- Fig. 3: zeigt einen Teil einer Halterung zur Lagerung von Formteilen in einem geschlossenen Zustand;
- Fig. 4: zeigt ein Blasformmagazin mit mehreren Halterungen zur Lagerung von Formteilen einer mehrteiligen Blasform.

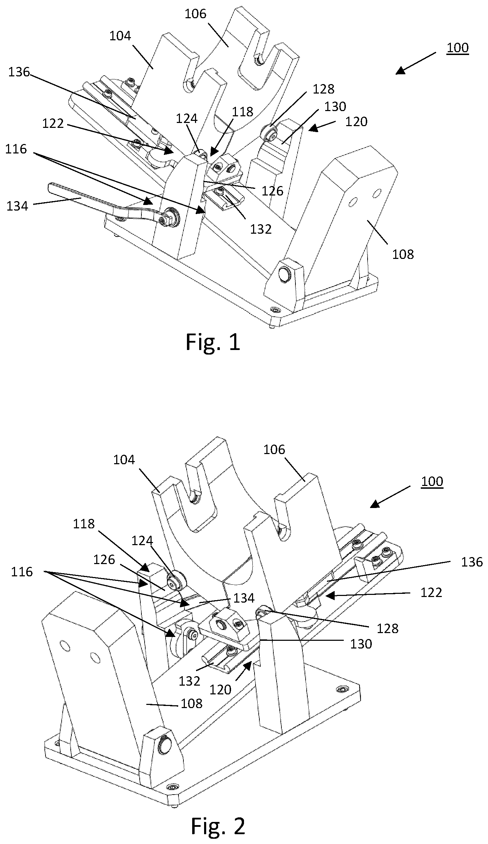

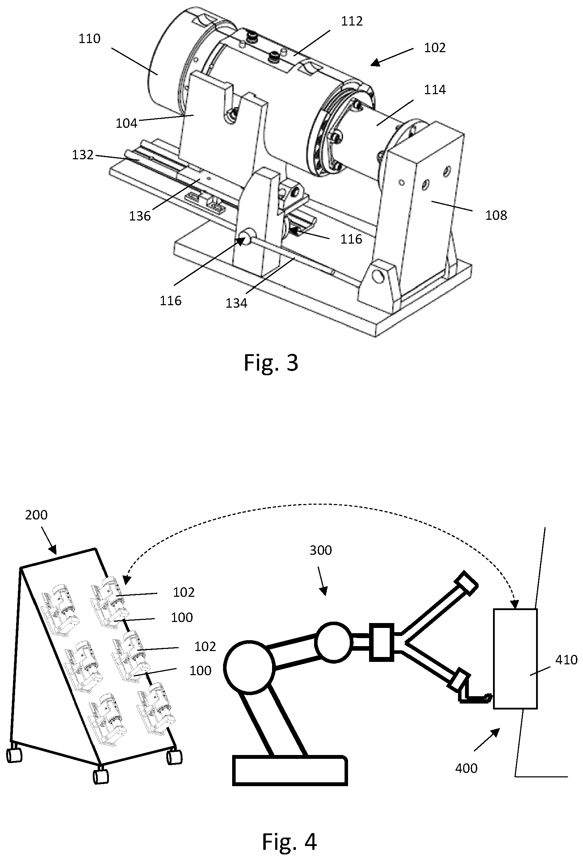

Die Figuren 1 und 2 zeigen die gleiche Halterung aus zwei unterschiedlichen Perspektiven. In den beiden Figuren ist eine Halterung 100 zur Lagerung von Formteilen 110, 112 und 114 einer mehrteiligen Blasform 102 gezeigt. Eine gehaltene Blasform 102 ist beispielsweise in der Figur 3 in einem geschlossenen Zustand der Blasform 102 gezeigt.

Die Halterung 100 umfasst ein erstes Haltelement 104 zum Halten eines ersten Seitenteils 110 der Blasform 102 und ein zweites Halteelement 106 zum Halten eines zweiten Seitenteils 112 der Blasform 102, und ein drittes Halteelement 108 zum Halten eines Bodenteils 114 der Blasform 102.

Die Halterung 100 weist eine betätigbare Verstellmechanik 116, 118, 120, 122 auf mit einer Betätigungseinrichtung 134, wobei die Verstellmechanik 116, 118, 120, 122 dazu eingerichtet ist, wenigstens eines der Halteelemente 104 106, 108 relativ zu einem der anderen Halteelemente 104, 106, 108 zu bewegen, um die gehaltenen Formteile 110, 112, 114 von einem geöffneten Zustand in einen geschlossenen Zustand zu bewegen oder umgekehrt von dem geschlossenen Zustand in den geöffneten Zustand. Der geschlossene Zustand ist beispielsweise in der Figur 3 gezeigt, in dem die drei Formteile 110, 112 und 114 in einem gefügten Zustand vorliegen. In diesem geschlossenen Zustand ist das Innere der Blasform 102 besser gegen Verunreinigung oder Beschädigung geschützt.

Die Verstellmechanik 116 weist ein erstes Verstellmittel 118 zum Bewegen des ersten Halteelementes 104 relativ zum zweiten Halteelement 106 auf. Das erste Verstellmittel 118 ist als Kurvengetriebe ausgebildet mit einer ersten Führungsrolle 124 und einer ersten Führungsfläche 126, wobei die erste Führungsrolle 124 an dem ersten Halteelement 104 befestigt ist und die erste Führungsrolle 124 entlang der ersten Führungsfläche 126 durch Betätigung der Betätigungseinrichtung 134 der Verstellmechanik 116, 118, 120, 122 bewegbar ist, um das erste Halteelement 104 relativ zum zweiten Haltelement 106 zu bewegen.

Zudem weist die Verstellmechanik 116, 118, 120, 122 ein zweites Verstellmittel 120 zum Bewegen des zweiten Halteelementes 106 relativ zum ersten Halteelement 104 auf. Das zweite Verstellmittel 120 ist ebenfalls als Kurvengetriebe ausgebildet mit einer zweiten Führungsrolle 128 und einer zweiten Führungsfläche 130, wobei die zweite Führungsrolle 128 an dem zweiten Halteelement 106 befestigt ist, und die zweite Führungsrolle 128 entlang der zweiten Führungsfläche 130 durch Betätigung der Betätigungseinrichtung 134 der Verstellmechanik 116, 118, 120, 122 bewegbar ist, um das zweite Halteelement 106 relativ zum ersten Halteelement 104 zu bewegen.

Wie in den Figuren 1 und 2 zu erkennen ist, bewegen sich die Führungsrollen 124 und 128 an den Führungsflächen 126 und 130 entlang, wenn die Verstellmechanik betätigt wird, die ein Hebelmittel 134 aufweist. Das Grundprinzip der gezeigten Mechanik ist dabei die eines Kurvengetriebes. Das erste und zweite Halteelement 104 und 106 sind beweglich ausgebildet. Wird der Hebel 134 betätigt, wird eine relative Bewegung der beiden Halteelemente 104 und 106 zueinander bewirkt.

Die Figuren 1 und 2 veranschaulichen zudem, dass die Verstellmechanik 116, 118, 120, 122 ein drittes Verstellmittel 122 zum Bewegen des ersten Halteelementes 104 und/oder zweiten Halteelementes 106 relativ zum dritten Halteelement (108) aufweist. Das dritte Verstellmittel 108 umfasst eine Linearführung in Form einer Gleitschiene 132 mit einem darauf beweglich angeordneten Gleitschlitten 136, wobei das erste Halteelement 104 und/oder das zweite Halteelement 106 an dem beweglichen Gleitschlitten 136 befestigt sind, um das erste Halteelement 104 und/oder zweite Halteelement 106 relativ zum dritten Halteelement 108 bewegbar auszubilden.

Der Gleitschlitten 136 ist durch Betätigung der Betätigungseinrichtung 134 der Verstellmechanik 116, 118, 120, 122 bewegbar, um das erste Halteelement 104 und/oder zweite Halteelement 106 relativ zum dritten Halteelement 108 zu bewegen. Nicht in den Figuren 1 und 2 dargestellt ist, dass der Gleitschlitten 136 über ein Koppelgetriebe betätigbar ausgebildet sein kann und sich der Gleitschlitten durch eine Betätigung des Hebelmittels 134 bewegt. Der in den Figuren1 und 2 gezeigte Schlitten 136 kann z.B. per Hand oder mit einem Industrieroboter verschoben werden.

Die in den Figuren 1 und 2 gezeigte Betätigungseinrichtung 134 der Verstellmechanik 116, 118, 120, 122 ist als ein Hebelmittel 134 ausgebildet, und durch ein Betätigen des Hebelmittels 134 ist das erste Halteelement 104 relativ zum zweiten Halteelement 106 bewegbar und/oder durch Betätigen des Hebelmittels 134 ist das zweite Halteelement 106 relativ zum ersten Halteelement 104 bewegbar und/oder durch Betätigen des Hebelmittels 134 ist das erste Halteelement 104 und zweite Halteelement 106 relativ zum dritten Halteelement 108 bewegbar.

Wie in den Figuren 1 und 2 zu erkennen ist, kann eine bewegliche Befestigungsplatte vorgesehen sein, an der die Gleitschiene 132 und der Gleitschlitten 126 angeordnet sind. Die neigbare Befestigungsplatte ist über zwei Drehlager mit dem Hebelmittel 134 verbunden. Die Befestigungsplatte kann also durch Betätigung des Hebelmittels 134 in der Neigung verändert werden. Diese Neigungsänderung führt dazu, dass sich entsprechend die Führungsrollen 124 und 128, die diese Neigungsbewegung mit ausführen, entlang der die Neigungsbewegung nicht ausführenden Führungsflächen 126 und 130 bewegen. Die Kurven der Führungsflächen 126 und 130 bewirken, dass sich die Halteelemente 104 und 106 relativ zueinander bewegen gemäß einer von den Kurven vorgegebenen Bewegungscharakteristik.

Die Figur 3 zeigt eine Halterung zur Lagerung von Formteilen in einem geschlossenen Zustand, die Halterung kann wie zum Beispiel in den Figuren 1 und 2 gezeigt ausgeführt sein. Im Gegensatz zu den Figuren 1 und 2 ist in der Figur 3 eine aufgenommene Blasform 102 mit Formteilen 110, 112, 114 dargestellt.

Die in der Figur 3 gezeigte Blasform 102 ist aus einem ersten Seitenteil 110, einem zweiten Seitenteil 112 sowie aus einem Bodenteil 114 ausgebildet. Wie in der Figur 3 zu erkennen ist, hält das erste Halteelement 104 das erste Seitenteil 110. Das zweite Halteelement 106 hält das zweite Seitenteil 112. Das dritte Halteelement 108 hält das Bodenteil 114. Das erste und zweite Halteelement 104 und 106 nehmen die Seitenteile 110 und 112 formschlüssig auf. Das dritte Halteelement 108 weist zwei Durchtrittsöffnungen auf, durch die sich abstehende Teile des Bodenteils erstrecken können. Solche abstehenden Teile können z.B. Anschlussleitungen oder Befestigungsmittel sein. Wie in der Figur 3 zu erkennen ist, sind die Formteile 110, 112 und 114 der Blasform 102 gefügt und der geschlossene Zustand liegt vor.

Die Figur 4 zeigt schematisch ein mobiles Blasformmagazin 200 mit mehreren Halterungen 100 zur Lagerung von Formteilen einer mehrteiligen Blasform 102. Das Blasformmagazin 200 ist also ein Magazin oder eine Ablageeinrichtung, auf dem bzw. auf der Blasformen 102 bereitgestellt oder abgelegt werden, die in die Umformmaschine 400 neu eingefügt werden sollen oder aus der Umformmaschine 400 herausgenommen werden. Das Einfügen oder Herausnehmen der Blasformen 102 aus der Umformmaschine 400, die mehreren Umformstationen 410 aufweist, kann beispielsweise mit einem Industrieroboter 300 erfolgen, der auch als Manipulator bezeichnet werden kann. Anstatt des Industrieroboters 300 kann aber auch ein manueller Wechsel per Hand erfolgen. Die Blasformen 102 werden aus dem Blasformmagazin 200 im geöffneten Zustand entnommen. Dies ist in der Figur 4 nicht dargestellt. In der Figur 4 sind die Blasformen 102 im geschlossenen Zustand dargestellt. Das dargestellte Blasformmagazin 200 ist bestückt mit bereits herausgenommen Blasformen 102 aus der Umformmaschine 400. Soweit noch weitere Blasformen entnommen werden sollen, kann das Magazin 200 nun gegen ein leeres Magazin ausgetauscht werden. Für den Austausch und den Abtransport des Magazins 200 sind die Blasformen 102 in den geschlossenen Zustand überführt worden.

### Bezugszeichenliste

- 100: Halterung
- 102: Blasform
- 104: erstes Haltelement
- 106: zweites Haltelement
- 108: drittes Haltelement
- 110: erstes Seitenteil
- 112: zweites Seitenteil
- 114: Bodenteil
- 116: Verstellmechanik
- 118: erstes Verstellmittel
- 120: zweites Verstellmittel
- 122: drittes Verstellmittel
- 124: erste Führungsrolle
- 126: erste Führungsfläche
- 128: zweite Führungsrolle
- 130: zweite Führungsfläche
- 132: Gleitschiene
- 134: Betätigungseinrichtung oder Hebelmittel
- 136: Gleitschlitten
- 200: Blasformmagazin
- 300: Industrieroboter oder Manipulator
- 400: Umformmaschine
- 410: eine von mehreren Umformstationen

## Patentansprüche

1. Halterung (100) zur Lagerung von Formteilen (110, 112, 114) einer mehrteiligen Blasform (102), nämlich zum Lagern alter Formteile und/oder zum Bereitstellen neuer Formteile in einer Magazineinrichtung für einen Umrüstvorgang, wobei die Halterung (100) umfasst:
- ein erstes Haltelement (104) zum Halten eines ersten Seitenteils (110) der Blasform (102),
- ein zweites Halteelement (106) zum Halten eines zweiten Seitenteils (112) der Blasform (102), und
- optional ein drittes Halteelement (108) zum Halten eines Bodenteils (114) der Blasform (102),
**dadurch gekennzeichnet, dass** die Halterung (100) eine betätigbare Verstellmechanik (116, 118, 120, 122) mit einer Betätigungseinrichtung (134) aufweist, wobei die Verstellmechanik (116, 118, 120, 122) dazu eingerichtet ist, wenigstens eines der Halteelemente (104, 106, 108) relativ zu einem der anderen Halteelemente (104, 106, 108) zu bewegen, um die gehaltenen Formteile (110, 112, 114) von einem geöffneten Zustand in einen geschlossenen Zustand zu bewegen oder umgekehrt von dem geschlossenen Zustand in den geöffneten Zustand.

2. Halterung (100) nach Anspruch 1, wobei die Verstellmechanik (116) ein erstes Verstellmittel (118) zum Bewegen des ersten Halteelementes (104) relativ zum zweiten Haltelement (106) aufweist.

3. Halterung (100) nach Anspruch 2, wobei das erste Verstellmittel (118) als Kurvengetriebe ausgebildet ist mit einer ersten Führungsrolle (124) und einer ersten Führungsfläche (126), wobei die erste Führungsrolle (124) bevorzugt an dem ersten Halteelement (104) befestigt ist und die erste Führungsrolle (124) entlang der ersten Führungsfläche (126) durch Betätigung der Betätigungseinrichtung (134) der Verstellmechanik (116, 118, 120, 122) bewegbar ist, um das erste Halteelement (104) relativ zum zweiten Haltelement (106) zu bewegen.

4. Halterung (100) nach einem der vorstehenden Ansprüche, wobei die Verstellmechanik (116, 118, 120, 122) ein zweites Verstellmittel (120) zum Bewegen des zweiten Halteelementes (106) relativ zum ersten Haltelement (104) aufweist.

5. Halterung (100) nach Anspruch 4, wobei das zweite Verstellmittel (120) als Kurvengetriebe ausgebildet ist mit einer zweiten Führungsrolle (128) und einer zweiten Führungsfläche (130), wobei die zweite Führungsrolle (128) bevorzugt an dem zweiten Halteelement (106) befestigt ist und die zweite Führungsrolle (128) entlang der zweiten Führungsfläche (130) durch Betätigung der Betätigungseinrichtung (134) der Verstellmechanik (116, 118, 120, 122) bewegbar ist, um das zweite Halteelement (106) relativ zum ersten Haltelement (104) zu bewegen.

6. Halterung (100) nach einem der vorstehenden Ansprüche, wobei die Verstellmechanik (116, 118, 120, 122) ein drittes Verstellmittel (122) zum Bewegen des ersten Halteelementes (104) und/oder zweiten Halteelementes (106) relativ zum dritten Haltelement (108) aufweist.

7. Halterung (100) nach Anspruch 6, wobei das dritte Verstellmittel (108) eine Linearführung (132) mit einem darauf beweglich angeordneten Schlitten (136) umfasst, wobei das erste Halteelement (104) und/oder das zweite Halteelement (106) an dem beweglichen Schlitten befestigt sind, um das erste Halteelement (104) und/oder das zweite Halteelement (106) relativ zum dritten Haltelement (108) bewegbar auszubilden, vorzugsweise ist der Schlitten (136) durch Betätigung der Betätigungseinrichtung (134) der Verstellmechanik (116, 118, 120, 122) bewegbar, um das erste Halteelement (104) und/oder das zweite Halteelement (106) relativ zum dritten Haltelement (108) zu bewegen.

8. Halterung (100) nach einem der vorstehenden Ansprüche, wobei die Betätigungseinrichtung (134) der Verstellmechanik (116, 118, 120, 122) als ein Hebelmittel (134) ausgebildet ist, und durch ein Betätigen des Hebelmittels (134) das erste Halteelement (104) relativ zum zweiten Halteelement (106) bewegbar ist und/oder durch Betätigen des Hebelmittels (134) das zweite Halteelement (106) relativ zum ersten Halteelement (104) bewegbar ist und/oder durch Betätigen des Hebelmittels (134) das erste Halteelement (104) und zweite Halteelement (106) relativ zum dritten Halteelement (108) bewegbar ist.

9. Blasformmagazin (200) mit wenigstens einer Halterung (100) zur Lagerung von Formteilen (110, 112, 114) einer mehrteiligen Blasform (102), wobei die Halterung (100) ausgebildet ist nach einem der Ansprüche 1 bis 8.

10. Verfahren zum Lagern von Formteilen (110, 112, 114) einer mehrteiligen Blasform (102), nämlich zum Lagern alter Formteile und/oder zum Bereitstellen neuer Formteile in einer Magazineinrichtung für einen Umrüstvorgang, umfassend die Schritte:
- Positionieren der Formteile (110, 112, 114) in einer Halterung (100) zur Lagerung von Formteilen (110, 112, 114) einer mehrteiligen Blasform (102);
- Betätigen einer betätigbaren Verstellmechanik (116) der Halterung (110) mit einer Betätigungseinrichtung (134) und relatives Bewegen wenigstens eines Halteelementes (104, 106, 108) der Halterung (100) relativ zu einem anderen Halteelement (104, 106, 108) der Halterung (100), um in der Halterung (100) positionierte Formteile (110, 112, 114) von einem geöffneten Zustand in einen geschlossenen Zustand zu bewegen.

11. Verfahren zum Bereitstellen von Formteilen (110, 112, 114) einer mehrteiligen Blasform (102) in einer Magazineinrichtung für einen Umrüstvorgang einer Umformmaschine (400), umfassend die Schritte:
- Betätigen einer betätigbaren Verstellmechanik (116) der Halterung (100) mit einer Betätigungseinrichtung (134) und relatives Bewegen wenigstens eines Halteelementes (104, 106, 108) der Halterung (100) relativ zu einem anderen Halteelement (104, 106, 108) der Halterung (100), um in der Halterung (100) positionierte Formteile (110, 112, 114) von einem geschlossenen Zustand in einen geöffneten Zustand zu bewegen.

12. Verfahren nach Anspruch 10 oder 11, wobei die Halterung (100) ausgebildet ist nach einem der Ansprüche 1 bis 8.

## Claims

1. A holder (100) for storing moulded parts (110, 112, 114) of a multi-part blow mould (102), namely for storing old, moulded parts and/or for making new moulded parts available in a storage device for a changeover operation, wherein the holder (100) comprises:
- a first holding element (104) for holding a first side part (110) of the blow mould (102),
- a second holding element (106) for holding a second side part (112) of the blow mould (102), and
- optionally, a third holding element (108) for holding a floor part (114) of the blow mould (102),
**characterized in that** the holder (100) comprises an actuated adjustment mechanism (116, 118, 120, 122) with an actuator (134), wherein the adjustment mechanism (116, 118, 120, 122) is designed to move at least one of the holding elements (104, 106, 108) relative to one of the other holding elements (104, 106, 108) in order to move the held moulded parts (110, 112, 114) from an open state to a closed state or, conversely, from the closed state to the open state.

2. The holder (100) according to Claim 1, wherein the adjustment mechanism (116) comprises a first adjustment means (118) for moving the first holding element (104) relative to the second holding element (106).

3. The holder (100) according to Claim 2, wherein the first adjustment means (118) is designed as a cam gear with a first guide roller (124) and a first guide surface (126), wherein the first guide roller (124) is preferably attached to the first holding element (104), and the first guide roller (124) can be moved along the first guide surface (126) by actuating the actuator (134) of the adjustment mechanism (116, 118, 120, 122) in order to move the first holding element (104) relative to the second holding element (106).

4. The holder (100) according to any one of the preceding claims, wherein the adjustment mechanism (116, 118, 120, 122) comprises a second adjustment means (120) for moving the second holding element (106) relative to the first holding element (104).

5. The holder (100) according to Claim 4, wherein the second adjustment means (120) is designed as a cam gear with a second guide roller (128) and a second guide surface (130), wherein the second guide roller (128) is preferably attached to the second holding element (106), and the second guide roller (128) can be moved along the second guide surface (130) by actuating the actuator (134) of the adjustment mechanism (116, 118, 120, 122) in order to move the second holding element (106) relative to the first holding element (104).

6. The holder (100) according to any one of the preceding claims, wherein the adjustment mechanism (116, 118, 120, 122) comprises a third adjustment means (122) for moving the first holding element (104) and/or second holding element (106) relative to the third holding element (108).

7. The holder (100) according to Claim 6, wherein the third adjustment means (108) comprises a linear guide (132) with a carriage (136) that is movably arranged on it, wherein the first holding element (104) and/or the second holding element (106) are attached to the movable carriage in order to make the first holding element (104) and/or the second holding element (106) movable relative to the third holding element (108); preferably, the carriage (136) can be moved by actuating the actuator (134) of the adjustment mechanism (116, 118, 120, 122) in order to move the first holding element (104) and/or the second holding element (106) relative to the third holding element (108).

8. The holder (100) according to any of the preceding claims, wherein the actuator (134) of the adjustment mechanism (116, 118, 120, 122) is designed as a lever means (134), and, by actuating the lever means (134), the first holding element (104) can be moved relative to the second holding element (106), and/or, by actuating the lever means (134), the second holding element (106) can be moved relative to the first holding element (104), and/or, by actuating the lever means (134), the first holding element (104) and the second holding element (106) can be moved relative to the third holding element (108).

9. A blow moulding storage device (200) comprising at least one holder (100) for storing moulded parts (110, 112, 114) of a multi-part blow mould (102), wherein the holder (100) is designed according to any one of the Claims 1 to 8.

10. A method for storing moulded parts (110, 112, 114) of a multi-part blow mould (102), namely for storing old, moulded parts and/or for providing new moulded parts in a storage device for a changeover operation, comprising the steps:
- positioning the moulded parts (110, 112, 114) in a holder (100) for storing moulded parts (110, 112, 114) of a multi-part blow mould (102);
- actuating an actuated adjustment mechanism (116) of the holder (110) with an actuator (134) and moving at least one holding element (104, 106, 108) of the holder (100) relative to another holding element (104, 106, 108) of the holder (100) in order to move moulded parts (110, 112, 114) positioned in the holder (100) from an open state to a closed state.

11. A method for providing moulded parts (110, 112, 114) of a multi-part blow mould (102) in a storage device for a changeover operation of a forming machine (400), comprising the steps:
- actuating an actuatable adjustment mechanism (116) of the holder (100) using an actuator (134) and moving at least one holding element (104, 106, 108) of the holder (100) relative to another holding element (104, 106, 108) of the holder (100) in order to move moulded parts (110, 112, 114) positioned in the holder (100) from a closed state to an open state.

12. The method according to Claim 10 or 11, wherein the holder (100) is formed according to any one of the Claims 1 to 8.

## Revendications

1. Support (100) d'entreposage de parties (110, 112, 114) d'un moule de soufflage (102) formé de plusieurs parties, pour entreposer des parties de moule précédemment utilisées et/ou à mettre à disposition de nouvelles parties de moule par un dispositif à magasin pour un processus de rééquipement, le support (100) comprenant :
- un premier élément de support (104) pour maintenir une première pièce latérale (110) du moule de soufflage (102),
- un deuxième élément de support (106) pour maintenir une deuxième pièce latérale (112) du moule de soufflage (102),
- optionnellement un troisième élément de support (108) pour maintenir une pièce de fond (114) du moule de soufflage (102),
**caractérisé en ce que** le support (100) présente un mécanisme d'ajustement (116, 118, 120, 122) actionnable avec un dispositif d'actionnement (134), le mécanisme d'ajustement (116, 118, 120, 122) étant conçu pour mouvoir au moins l'un des éléments de support (104, 106, 108) par rapport à l'un des autres éléments de support (104, 106, 108) pour déplacer les parties de moule (110, 112, 114) maintenues de façon à passer d'un état ouvert à un état fermé ou, inversement, de l'état fermé à l'état ouvert.

2. Support (100) selon la revendication 1, le mécanisme d'ajustement (116) présentant un premier moyen d'ajustement (118) pour mouvoir le premier élément de support (104) par rapport au deuxième élément de support (106).

3. Support (100) selon la revendication 2, le premier moyen d'ajustement (118) étant réalisé sous forme de commande à cames avec un premier galet de guidage (124) et une première surface de guidage (126), le premier galet de guidage (124) étant de préférence fixé au premier élément de support (104) et le premier galet de guidage (124) pouvant être déplacé le long de la première surface de guidage (126) par actionnement du dispositif d'actionnement (134) du mécanisme d'ajustement (116, 118, 120, 122) pour positionner le premier élément de support (104) par rapport au deuxième élément de support (106).

4. Support (100) selon l'une des revendications précédentes, le mécanisme d'ajustement (116, 118, 120, 122) présentant un deuxième moyen d'ajustement (120) pour mouvoir le deuxième élément de support (106) par rapport au premier élément de support (104).

5. Support (100) selon la revendication 4, le deuxième moyen d'ajustement (120) étant réalisé sous forme de commande à cames avec un deuxième galet de guidage (128) et une deuxième surface de guidage (130), le deuxième galet de guidage (128) étant de préférence fixé au deuxième élément de support (106) et le deuxième galet de guidage (128) pouvant être déplacé le long de la deuxième surface de guidage (130) par actionnement du dispositif d'actionnement (134) du mécanisme d'ajustement (116, 118, 120, 122) pour positionner le deuxième élément de support (106) par rapport au premier élément de support (104).

6. Support (100) selon l'une des revendications précédentes, le mécanisme d'ajustement (116, 118, 120, 122) présentant un troisième d'ajustement (122) pour mouvoir le premier élément de support (104) et/ou le deuxième élément de support (106) par rapport au troisième élément de support (108).

7. Support (100) selon la revendication 6, le troisième moyen d'ajustement (108) comprenant un guidage linéaire (132) avec, agencé sur celui-ci, un coulisseau (136) mobile, le premier élément de support (104) et/ou le deuxième élément de support (106) étant fixés sur le coulisseau mobile pour assurer la mobilité du premier élément de support (104) et/ou du deuxième élément de support (106) par rapport au troisième élément de support (108), le coulisseau (136) étant de préférence déplaçable par actionnement du dispositif d'actionnement (134) du mécanisme d'ajustement (116, 118, 120, 122) pour positionner le premier élément de support (104) et/ou le deuxième élément de support (106) par rapport au troisième élément de support (108).

8. Support (100) selon l'une des revendications précédentes, le dispositif d'actionnement (134) du mécanisme d'ajustement (116, 118, 120, 122) étant réalisé sous forme de moyen à levier (134) et l'actionnement du moyen à levier (134) assurant le déplacement du premier élément de support (104) par rapport au deuxième élément de support (106) et/ou l'actionnement du moyen à levier (134) assurant le déplacement du deuxième élément de support (106) par rapport au premier élément de support (104) et/ou l'actionnement du moyen à levier (134) assurant le déplacement du premier élément de support (104) et du deuxième élément de support (106) par rapport au troisième élément de support (108).

9. Magasin (200) pour moule de soufflage avec au moins un support (100) d'entreposage de parties (110, 112, 114) d'un moule de soufflage (102) formé de plusieurs parties, le support (100) étant conçu selon l'une des revendications 1 à 8.

10. Procédé d'entreposage de parties (110, 112, 114) d'un moule de soufflage (102) formé de plusieurs parties, pour entreposer des parties de moule précédemment utilisées et/ou à mettre à disposition de nouvelles parties de moule par un dispositif à magasin pour un processus de rééquipement, le procédé comprenant les étapes suivantes :
- positionnement des parties de moule (110, 112, 114) dans un support (100) d'entreposage de parties (110, 112, 114) d'un moule de soufflage (102) formé de plusieurs parties ;
- actionnement d'un mécanisme d'ajustement (116) actionnable du support (100) avec un dispositif d'actionnement (134) et mouvement relatif d'au moins un élément de support (104,106,108) du support (100) par rapport à un autre élément de support (104,106,108) du support (100) pour mouvoir les parties de moule (110, 112, 114) positionnées dans le support (100) de façon à passer d'un état ouvert à un état fermé.

11. Procédé de mise à disposition de parties (110,112,114) d'un moule de soufflage (102) formé de plusieurs parties dans un dispositif à magasin pour un processus de rééquipement d'une machine de formage (400) comprenant les étapes suivantes :
- actionnement d'un mécanisme d'ajustement (116) actionnable du support (100) avec un dispositif d'actionnement (134) et mouvement relatif d'au moins un élément de support (104,106,108) du support (100) par rapport à un autre élément de support (104,106,108) du support (100) pour mouvoir les parties de moule (110, 112, 114) positionnées dans le support (100) de façon à passer d'un état fermé à un état ouvert.

12. Procédé selon la revendication 10 ou 11, le support (100) étant conçu selon l'une des revendications 1 à 8.
